# EUROPEAN PATENT APPLICATION

(11) **EP 3 945 701 A1**
(43) Date of publication of application: **02.02.2022**
(21) Application number: 20187873.3
(22) Date of filing: 27.07.2020
(51) Int. Cl.: H04L 27/26

(54) **TRANSMITTING DATA VIA ANTENNA SIGNALS HAVING ARBITRARY PHASE-DEVIATIONS**

(71) Applicant: Technische Universität Darmstadt, 64289 Darmstadt (DE)
(72) Inventor: ASADI, Arash, 64289 Darmstadt (DE); BÄUML, Andreas, 64289 Darmstadt (DE); ABANTO-LEON, Luis, 64289 Darmstadt (DE); SIM, Gek Hong (Allyson), 64289 Darmstadt (DE); HOLLICK, Matthias, 64289 Darmstadt (DE)
(74) Representative: Zahn, Matthias

(57) **Abstract**

Generating an antenna signal (390) for transmitting data is adapted to apply frequency division multiplexing over subcarriers. A symbol unit (120) obtains logical code symbols (311, 312, 313) and derives modulation symbols (321, 322, 323) with subcarrier-specific values for an in-phase component (I) and for a quadrature component (Q). A baseband processor unit (160) performs baseband processing to the modulation symbols (321, 322, 323) to generate the antenna signal (390). A pattern unit (150) obtains a pattern matrix (340) with phase rotation values (dl, d2, d3) that indicate arbitrary phase-deviations per subcarrier and applies the phase rotation values to the modulation symbols (321, 322, 323) so that baseband processing (460) is performed with modified modulation symbols (351, 352, 353).

## Description

### Technical Field

In general, the disclosure relates to transmitting and receiving data via radio signals. More in particular, it relates to techniques that introduce arbitrary phase-deviations to the radio signals so that intrinsic phase-deviations (caused by manufacturing variations of integrated circuits) are no longer characteristic for particular devices.

### Background

The Open Systems Interconnection model (OSI model) gives a conceptual overview to the communication among computers and other devices.

Much simplified, the highest layer - the application layer (or layer 7) - defines the application of the communication. Depending on the application, there are specific requirements in view of data-transfer rate (such as bits and bytes per time), security (such as privacy, device authentication), reliability (such as robustness) and so on.

The lowest layer - the physical layer (or layer 1) - can comprise radio components, such as transmitters and receivers that are part of the device. However, the benefit of turning the device "wireless" may cause potential challenges (rate, security, reliability etc.). Well-known measures can address some of them. For example, encrypting and decrypting data in the intermediate layers (e.g. datalink layer 2, network layer 3) enhances security.

In many cases, the radio components are integrated circuits on semiconductors. Such circuits can be so-called baseband processors circuits. These are small computer processors with own firmware (i.e., instructions set on memory). The processors combine the transmitter and receiver functions.

As semiconductor manufacturing involves a lot of chemical processes, the circuits show minor variations in their dimensions or in other properties. As a further consequence, two physical circuits have slightly different electrical characteristics.

For example, two physical radio transmitters may generate their signals with relatively minor deviations in the phase of the signals. If devices require their radio components to apply frequency division multiplexing, the phase-deviations are frequency-specific. The manufacturing variations - such as the frequency-specific phase-deviations - are intrinsic to a particular circuit and can not be modified (or switched off).

The radio receivers accommodate such deviations when the deviations stay within standardized tolerances.

Measuring such frequency-specific phase-deviations and relating the deviations to particular devices is well-known. Metaphorically, deviation-to-frequency functions are called radiometric signatures (or "radiometric fingerprints").

An introduction into such signatures is discussed by Vladimir Brik, Suman Banerjee, Marco Gruteser, and Sangho Oh. Wireless Device Identification with Radiometric Signatures. In ACM MobiCom, pages 116-127, Sep 2008.

As signatures are characteristic for a particular device, the signatures can be a tool to authenticate that particular device.

However, for some applications, the deviations appear as constraints that lead to security risks. Detecting the signature of the transmitter (in a particular device) can make the device an easy target for tracking. Once an attacker recognizes the signature, the attacker can misuse the signature to run impersonation attacks.

By way of example, a WLAN network (wireless local area network) is an example for state-of-the art radio technology (i.e., wireless transmission technology). WLAN-enabled devices can be mobile phones, portable computers, access points devices, etc. WLAN is specified by IEEE 802.11, being a set of standards by the IEEE Standards Association. For example, IEEE 802.11ac (December 2013) refers to high-throughput WLANs on the 5 GHz band.

Usually, each device has a WLAN-circuit that implements the transmitters and receivers. The WLAN-circuit applies multiplexing (e.g., Orthogonal Frequency Division Multiplexing OFDM over multiple subcarrier frequencies) and QPSK modulation (for most of the carriers, other modulation for pilot carriers). The WLAN-circuit communicates data in so-called frames ("IEEE 802.11 PHY frames"). The number of subcarriers K depends on the bandwidth (i.e., channel spacing).

For example, the frequency band between 5.170 GHz and 5.330 GHz has 8 channels, each with a 20 MHz bandwidth. In IEEE terms, these channels are numbered 36, 40, 44, 48, 52, 56 and 60. The WLAN-circuit can operate in a single channel (e.g., channel 36) with K = 64 subcarriers (20 MHz/64 = 312.5 kHz subcarrier spacing). The WLAN-circuit can operate in two adjacent channels (e.g., channels 36 and 40) with K = 128 subcarriers (40 MHz/128) or otherwise.

Other definitions are possible as well, such as K = 52 subcarriers (IEEE 802.11a legacy). Again, the baseband processor circuit (i.e., the WLAN-circuit) is an integral part of the device. Intrinsic phase-deviations of the circuits are like signatures of the devices.

Signature-based authentication is possible, but impersonation attacks are possible as well. There is a requirement to provide technical measures to avoid such situations.

### Summary

Method, system and computer program according to the independent claims provide a solution. In general, the transmitter generates the antenna signal with frequency-specific phase-deviations. The phase-deviations still comprise the intrinsic phase-deviations, but further comprise arbitrary phase-deviations.

In other words, while the intrinsic phase-deviations can not be avoided, the transmitter additionally introduces arbitrary phase-deviations. The resulting composite signature (intrinsic + arbitrary) is different from the intrinsic signature.

Adding arbitrary phase-deviations does not disturb the operation of the receiver. The receiver can still accommodate the phase-deviations and for the receiver it does not matter if the phase-deviations are intrinsic only or composite deviations. It is advantageous that the receiver does not have to be adapted to the arbitrary phase-deviations.

In other words, the approach provides downward compatibility: A transmitter adding arbitrary phase-deviation can still successfully transmit data to not-yet-adapted receivers.

It is further advantageous that the manufacturing of the integrated circuits (such as the baseband processor circuits) can remain unchanged. The circuits continue to show intrinsic phase-deviations. For transmitters implemented by baseband processors circuits, the arbitrary phase-deviations are introduced via the firmware of the processor.

Optionally, the transmitter applies the arbitrary phase-deviations in a pattern that is also known to the receiver. In that case, the receiver applies the same pattern. Since both deviations (intrinsic, arbitrary) are additive, the receiver can subtract the arbitrary phase-deviations to recognize the intrinsic phase-deviations (of the transmitter). Therefore, the receiver can recognize the intrinsic signature of the transmitter. Receivers without applying the same pattern can not recognize the intrinsic phase-deviations. Therefore, device authentication becomes possible again, but impersonation attacks are more difficult to run.

Optionally, the transmitter (and the receiver) use patterns that change over time. Therefore, the (composite) signature changes over time as well. Such an approach makes it difficult for non-authorized devices to associate signatures (here: composite signatures) with particular devices. Impersonation attacks become even more difficult.

Optionally, for data transmission in frames (cf. the WLAN example), the change rate for the pattern is synchronized to the frames. For example, the transmitter changes the pattern for every new frame that it transmits.

Optionally, both the transmitter and the receiver obtain the pattern by executing a predefined pattern generation rule. Pattern generating can be implemented by the baseband processor circuits, and it may be advantageous that generating patterns does not require to store all patterns in the (limited) memory of the circuits.

Optionally, the pattern generation rule relies on a pseudo-randomization key that the transmitter and the receiver exchange in advance (i.e., pre-shared key). Distributing a single key requires less computational efforts than distributing multiple different patterns. There is a further advantage that the pattern generation rule does not have to be made specific to particular types of baseband processor circuits.

A pattern that changes over time appears like a random pattern (to an attacker), but it is deterministic. The same applies for the composite signature that apparently changes at random, but changes in a deterministic way.

The pattern will eventually show a repetition (i.e., a periodicity) leading to a concatenated signature (over time). Such a concatenated signature could be detected (by attackers). Such a concatenated signature would be characteristic for a particular transmitter indeed. Pseudo-randomization with an appropriately selected key (KEY) in combination with a synchronization index (INDEX) leads to a relatively large number of different patterns. The concatenated signature would have to be collected by measuring the phase-deviations in a relatively long interval in the order of hours or days. For attackers, such long intervals are not attractive.

Optionally, transmitter and receiver update the key every time their corresponding devices establish a data connection. Such a scenario is convenient for WLAN-enabled devices, with one device being a WLAN access point, and the other device being a mobile device. The data connection is established (and the key is updated) when the mobile devices reaches the communication range of the WLAN access point. When the connection stops (for example, when the mobile device leaves the range), the key is deactivated.

From the system perspective of both the transmitter and the receiver, there is a method to communicate data from a radio transmitter to a radio receiver. The transmitter uses frequency division multiplexing over a set of subcarriers by modulating logical code symbols to modulation symbols with values for an in-phase component and for a quadrature component. The modulation symbols are specific for the subcarriers of the set of subcarriers. The radio receiver de-modulates the modulation symbols to logical symbols. The method is characterized in that both the radio transmitter and the radio receiver apply a pre-defined pattern matrix with phase rotation values that indicate arbitrary phase-deviations per subcarrier. The pattern matrix is applied between modulator and baseband processor at the radio transmitter and between baseband processor and de-modulator at the radio receiver.

Optionally, the radio transmitter and the radio receiver communicate data in IEEE 802.11 PHY frames, wherein the pattern matrix is modified with every new frame, and wherein the pattern matrix is being calculated frame-wise from a pseudo-randomization key in application of a pattern generation rule. Modifying the pattern for every new frame makes it more difficult for intercepting devices to regain the pattern matrix.

The method can be applied for data communication between a first wireless device and a second wireless device each having a radio transmitter and a radio receiver, with a first device being a WLAN access point device, and the second device being a mobile device. Refreshing the pseudo-randomization key is performed every time the second device reaches the communication range of the first device, and de-activating the pseudo-randomization key is performed when the second device leaves the communication range.

The methods can be computer-implemented method because the steps can be implemented by baseband processing circuits that comprise processor and memory and that can be programmed by instructions.

Once a baseband processing circuit (at the transmitter) has generated the antenna signal, it can be forwarded to the antenna, optionally with amplifying. The antenna at the receiver forwards the antenna signal, optionally with amplifying, to the baseband processing circuit at the receiver.

A computer program product can be implemented as firmware in the baseband processing circuit that, when loaded into a memory of the baseband processing circuit and being executed by at least one processor of that circuit, performs the method steps.

A radio transmitter is adapted to generate an antenna signal for transmitting data to a radio receiver by applying frequency division multiplexing over a set of subcarriers, the radio transmitter is adapted to execute the method steps.

Likewise, the principle of using a computer program product can be applied to a radio receiver that uses frequency division multiplexing over a set of subcarriers, the radio is adapted to execute the method steps, although some steps are inverted: The radio receiver can obtain the pattern matrix (with the set of phase rotation values that indicate arbitrary phase-deviations per subcarrier) to regain the intrinsic signature of the transmitter.

### Brief Description of the Drawings

FIG. 1 illustrates the communication between radio equipment, with two wireless devices;
FIG. 2 illustrates some aspects of quadrature modulation by showing constellation diagrams;
FIG. 3 illustrates frequency division multiplexing by way of a simplified example;
FIG. 4 again illustrates the communication between the wireless devices, but also illustrates signature modification by applying a pattern matrix;
FIG. 5 illustrates a block diagram of a transmitter that introduces arbitrary phase-deviations;
FIG. 6 illustrates frequency-specific phase-deviations by an intrinsic signature, by an arbitrary signature and by a composite signature;
FIG. 7 illustrates frequency-specific phase-deviations by the signatures of FIG. 6 in an example with more subcarriers;
FIG. 8 illustrates frequency-specific phase-deviations for the receiver recovering the intrinsic signature by subtracting the arbitrary signature from the composite signature;
FIG. 9 illustrates a pattern unit that generates a pattern matrix by applying a pseudo-randomization key to a pattern generation rule;
FIG. 10 illustrates a flow chart of a method to generate an antenna signal, and of the method to process the antenna signal; and
FIG. 11 illustrates a WLAN network with a plurality of WLAN-enabled devices, with key updates.

### Detailed Description

### Overview

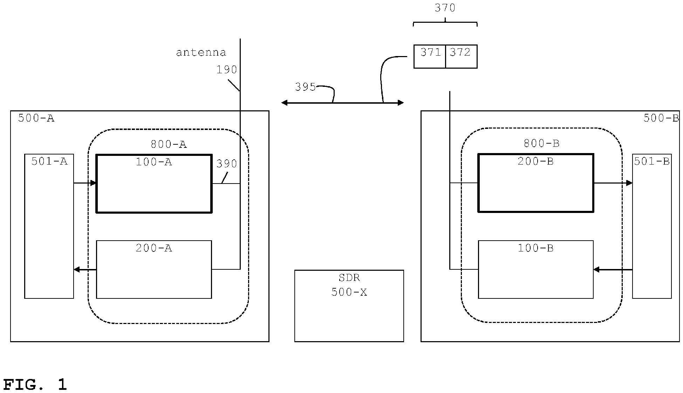

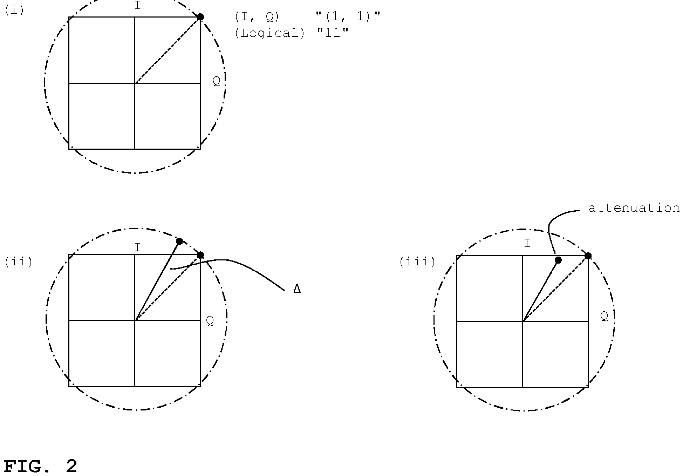

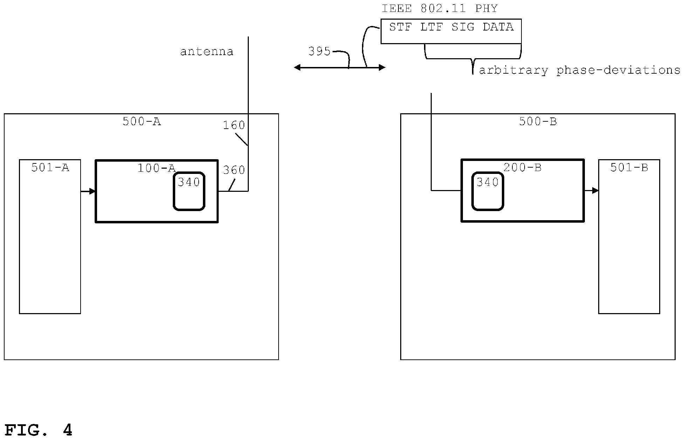

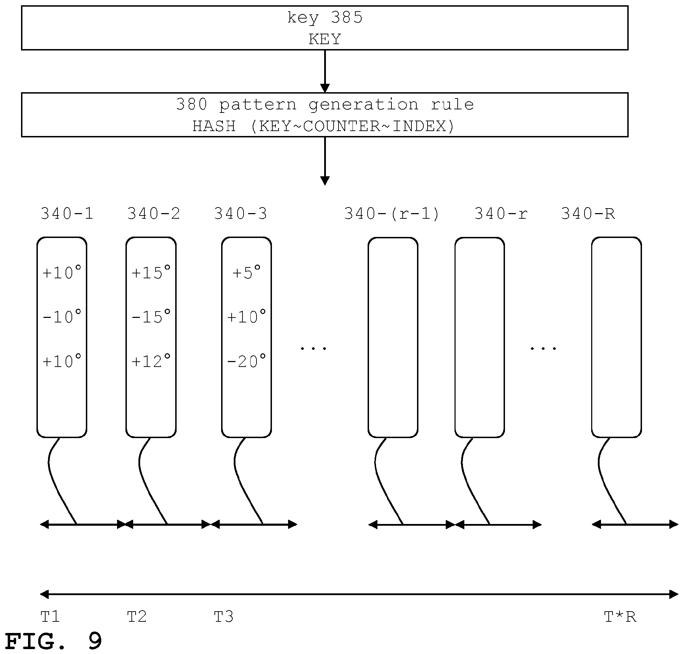

The description starts with illustrating the communication between two devices (FIG. 1) and explaining a characteristic phase-deviation signature (or "intrinsic signature") that is related to using frequency division multiplexing (FIGS. 2-3). FIGS. 1-3 also explain some of the constraints (or technical challenges) that the intrinsic signature might create. Occasionally, the description compares the inter-device communication to well-known traditional modulation so that the constraints become more visible. FIGS. 4-8 illustrates the main approach to address the constraints in general by introducing an arbitrary signature (by arbitrary phase-deviations, and FIGS. 9-11 illustrate further optional details.

### Terminology

The term pair "transmit" and "receive" refers to wireless communication between devices, and "provide" and "obtain" refer to intra-device data exchange. The term "vector" refers to a graphical representation of signal components, and the term "matrix" refers to a set of numerical values (having the cardinality of K subcarrier frequencies).

### WLAN

In general, the approach is applicable for radio components (i.e., transmitters and receivers) that apply frequency domain multiplexing (because the phase-deviations are frequency specific). The radio components can be integrated circuits, such as baseband processors circuits. The description takes WLAN as an example technology for that the approach is suitable. In general, every WLAN-enabled device comprises baseband processors circuits. However, references to WLAN are just convenient examples for illustration. The person of skill in the art can apply the disclosure to other wireless technologies as well.

### Introduction

FIG. 1 illustrates the communication between radio equipment, here illustrated by wireless device 500-A (on the left side) and wireless device 500-B (on the right side). The letters A and B merely differentiate the devices and their components. The description will omit them for clarity whenever appropriate. The letters can also stand for device users (e.g., Alice and Bob, respectively).

As illustrated, devices 500-A/500-B have the physical layer implemented by transmitters 100-A/100-B and by receivers 200-A/200-B. The space between the antennas between A and B can be regarded as the channel. Devices 500-A/500-B have the other layers (from data link layer 2 to application layer 7) implemented as well. The figure symbolizes the other layers by main part 501-A/501-B.

There is no need that both devices have all the components that the figure illustrates. A convenient simplification is device 500-A with main part 501-A and transmitter 100-A only sending data in A-to-B direction to device 500-B with receiver 200-B and main part 501-B only.

The separation into the transmitting and receiving functions is convenient for illustration. In practical implementations, transmitter 100-A/100-B and receiver 200-A/200-B can be implemented on single integrated circuit 800-A/800-B (sometimes called baseband processor circuit, or "baseband processor"). As the functional combination of transmitter and receiver is conveniently called "transceiver", circuit 800 can be called "transceiver chip" as well.

Much simplified, transmitter 100 comprise an oscillator that generates carrier signals at predefined frequencies, and a modulator that modifies the carrier signals according to data signals (i.e., from layer 2) to antenna signal 390. Antenna 190 is just symbolized.

In general, transmitter operate in a variety of modulation approaches. To give an example from a different field of application, the modulator can modify the amplitude of the carrier signal. A prominent example of such well-known amplitude modulation (AM) is the time-signal radio station DCF77, located near Frankfurt/Germany. The station (that would correspond to device 500-A with transmitter 100-A) uses a kilometer-wave carrier at 77.5 kHz and applies AM (and some other modulation) to convey the current time by digital symbols.

A prominent further example is frequency modulation (FM) used by radio stations for public broadcasting.

For some reasons, such as frequency-specific attenuation of some carrier signals, transmitter 100 can apply frequency-division multiplexing (FDM). In that case, transmitters 100 distributes data to signal components at different frequencies.

Persons of skill in the art implement receiver 200 with complementary functions, such as demodulators that retrieve data from the antenna signal.

In the mentioned examples for broadcasting (using a simplex channel, one transmitter transmits the same data to multiple receivers), there is no concern regarding data privacy. The application (in main part 501-A) to distribute time data, news, music and so on can not be secret.

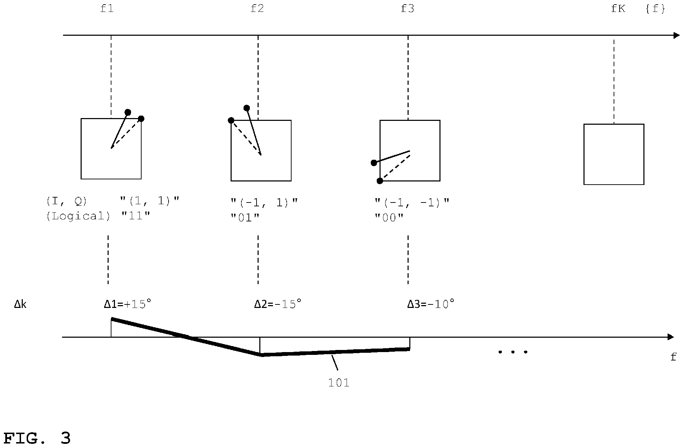

However, the situation changes dramatically for applications where the number of communication participants is relatively low (e.g., one Alice, one Bob). Distributing data to frequency-specific signals may be linked with the transmitter 100 showing intrinsic signature 101 (details in FIG. 3).

FIG. 1 also illustrates some further aspects:
- The transmitter transmits data in so-called consecutive signal frames 370 (or "frames" in short), each having equal duration T (or "frame rate"). Each frame 370 comprises as standardized number of Orthogonal Frequency Division Multiplexing (OFDM) symbols.
- It is possible to intercept intrinsic signature 101 by third devices, such as by SDR 500-X (details in FIG. 3).

In case of WLAN, devices 500 can be mobile phones, portable computers, access points devices, etc. that operate both with transmitters 100 and receivers 200 implemented in a WLAN-circuit (i.e., circuit 800). Again, much simplified to the concept, the transmitters/receivers apply multiplexing (e.g., OFDM, with different equally spaced subcarriers, cf. FIG. 3) and QPSK (for most of the carriers, other modulation for pilot carriers). Digital symbols are encoded by combinations of amplitudes/phases, and symbols are allocated across the subcarriers. Frame 370 corresponds to IEEE 802.11 PHY frames. The standards give more details.

### Phase-deviations and signatures

FIG. 2 illustrates some aspects of quadrature modulation by showing constellation diagrams.

While traditional modulation approaches (such as AM and FM) have relatively limited data-transfer rates (e.g., DCF77 substantially transmits a time-signal only), modern transmitters apply more advanced modulation approaches.

Again, to give only one example: the oscillators can provide carriers as a combination of two signal components. The components have the same frequency, but have the phase shifted by 90°. In usually notation, the components are
- the in-phase component (acronym I) and
- the quadrature component (Q).

The modulator can modify the amplitudes and/or the phases of the components, and the skilled person is familiar with in quadrature amplitude modulation (QAM) and/or quadrature phase-shift keying modulation (QPSK).

Constellation diagrams (or phasor diagrams) are convenient tools to illustrate QAM/QPSK, well-known in the art. The figure therefore only shows modulation symbol (I, Q) = (1, 1) as a vector (by a dashed line). The vector can also be considered as a complex numeric value (with real and imaginary parts). As used in the following, the (I, Q) vector (1,1) should stand for local code symbols "11", but this is just an example.

In general, there is a pre-defined mapping (i.e., digital modulation, or other relation) between the logical code symbols and the modulation symbols. There is even no requirement to have the mapping standardized, in principle any bijective relation would be applicable. (Digital de-modulation at the receiver applies the same mapping in inverse order.)

In an ideal situation (i), signal components go from transmitter 100 to receiver 200 by retaining their initial values (via an ideal channel etc.).

In practical, non-ideal situations such as in (ii), there is a deviation given as phase-deviation Δ (here from the dashed line to the plain line). The phase-deviation is intrinsic to the particular transmitter. The amplitude of the quadrature signal (the circle symbol) remains unchanged. In practical situations such as in (iii), the channel causes further effects, here merely symbolized by a reduced amplitude (at the receiver, a shorter vector, due to attenuation). One reason for such phase-deviation Δ are the above-mentioned intrinsic manufacturing variations in the integrated circuits (causing imbalances between carriers I and Q).

Taking circuits 800 (of FIG. 1) as an example, transmitter 100-A (in circuit 800-A) would have a (slightly) different phase-deviation than transmitter 100-B (in circuit 800-B).

The description uses four modulation symbols only. The person of skill in the art can apply modulation with higher granularity. For example, WLAN according to IEEE 802.11ac contemplates to use 256-QAM

### Frequency division multiplexing, OFDM symbols

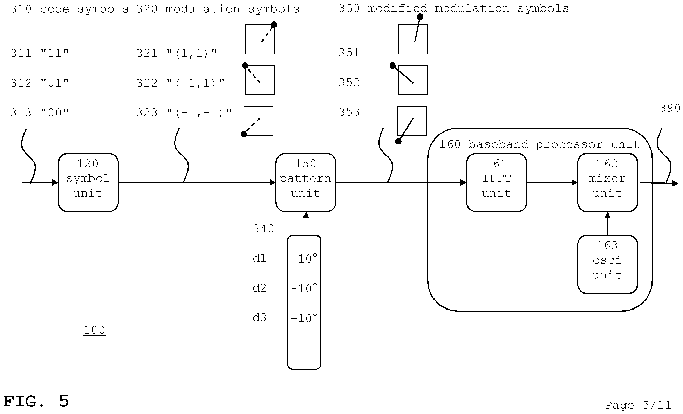

Modulation symbols alone are not sufficient for generating the antenna signal. The transmitter allocates the modulation symbols to subcarriers (FIG. 3, FIG. 5) leading to an intermediate signal (i.e., a matrix of K complex numeric values, in the frequency domain), and converts the intermediate signal to the antenna signal (in the time domain). By allocating and converting, the transmitter thereby generates a single OFDM symbol. The receiver does the opposite, it detects the OFDM symbols and regenerates the modulation symbols.

Since the use of OFDM symbols is well-known in the art both for the transmitter and for the receiver, the description focuses on some aspects at the transmitter. The person of skill in the art can than apply the teachings to the receiver accordingly.

FIG. 3 illustrates frequency division multiplexing (FDM) by way of a simplified example. The figure takes over the notation from (ii) of FIG. 2. At the top, the figure illustrates a symbol-frequency diagram with subcarriers f1, f2, f3 and fK (collectively set of subcarriers {f}, with k being the subcarrier index). The number of code symbols roughly corresponds to the number K of subcarriers (minus subcarriers with pilot signals). For simplicity, the figure illustrates the transmission of 3 code signals with 3 subcarriers and ignores the pilot signals.

In the example, transmitter 100 obtains a set of logical code signals " 11 ", "01" and "00" (i.e. from main part 501) and derives modulation symbols (cf. the small constellation diagrams) (1, 1), (-1, 1) and (-1, -1), respectively. Transmitter 100 derives the modulation symbols according to the above-mentioned mapping. Transmitter 100 transmits (to the antenna) (1,1) at f1, (-1, 1) at f2, and (-1, -1) at f3.

By conversion from the frequency domain to the time domain, the transmitter generates the antenna signal with a single OFDM symbol. The process is repeated for subsequent OFDM symbols.

As already mentioned, wireless device 500 comprises an integrated circuit (e.g., the baseband processor circuit) that implements the functions of transmitter 100 and of receiver 200 of the physical layer (cf. FIG. 1). Transmitter 100 generates antenna signal 390 with minor deviations from an ideal signal, and the channel (cf. FIG. 1) between transmitter and receiver shows fluctuation (or non-coherencies).

At the receiver (such as by an SDR), the deviations would appear as phase-deviation that are frequency-specific. The figure illustrates them by example: Δ1=+15° at f1, Δ2=-15° at f2, and Δ3=-10° at f3.

As illustrated, the phase-deviations are different among the subcarriers (i.e., f1, f2, f3), and the figure shows the phase-deviations graphically as a function with subcarrier indices (here 1, 2 and 3). The deviation-to-carrier relation can be described by superimposing: a linear relation (not illustrated, such as time-of-flight, frame detection delay, sampling frequency offset and carrier frequency offset), and a non-linear relation (as illustrated by the graph).

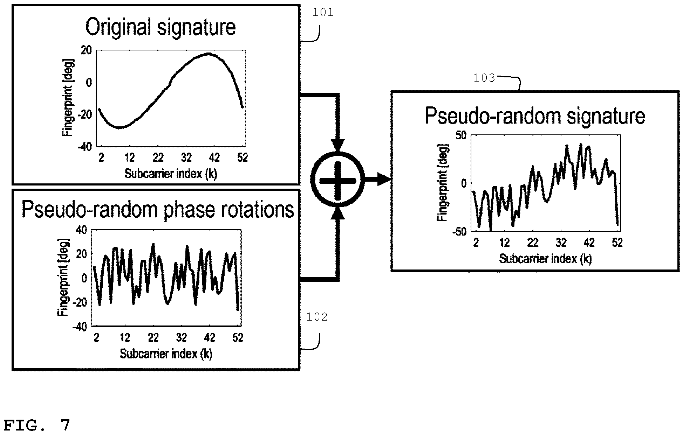

But in many cases, the (non-linear) graph would appear as a sinus curve (not a pure sinus, but something similar, cf. FIG. 7). The graph would be characteristic for a particular device, and can be regarded as intrinsic signature 101.

In the WLAN example (e.g., K = 64 subcarriers, 20 MHz/64 = 312.5 kHz spacing), the WLAN-circuit does not use all K subcarriers to convey data, some subcarriers transmit pilot signals. The transmitter performs the domain conversion Inverse Fast Fourier Transformation (IFFT). The person of skill in the art can accomplish this by setting the appropriate conversion parameters (such as K set points or sampling points).

### Receiver tolerance

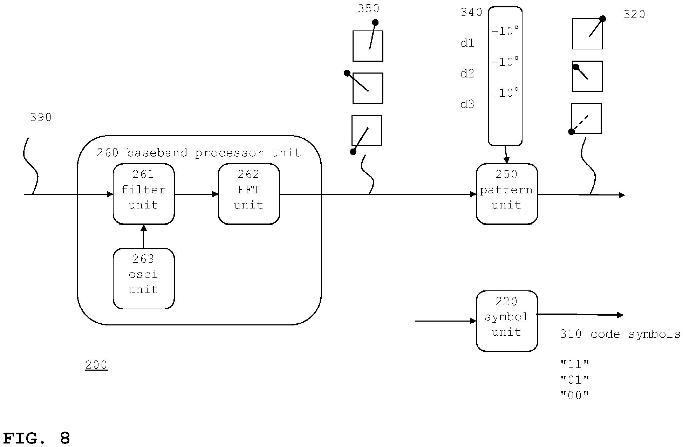

Antenna signal 390 that arrives at receiver 200 (e.g., receiver 200-B from transmitter 100-A, cf. FIGS. 1, 8) is not an ideal signal, one reason is attenuation, cf. FIG. 2(iii). To regenerate the symbols, receiver 200 performs so-called channel estimation. One well-known approach applies framing. The transmitter sends data in frames 370 with sections. Consecutive frames 370 form a data stream. First frame section 371 comprises signals that the receiver uses to fine-tune its channel estimation, and second frame section 372 comprises the data.

In other words, receiver 200 can understand (most of) the data even even if there are phase-deviations (and/or attenuations). Receiver 200 can therefore ignore intrinsic signature 101 (and also any arbitrary signature 102). It would still be able to recover the data.

Since the frames have pre-defined durations (and have pre-defined start and end), it is convenient to synchronize the change of the pattern to the frames.

In case of WLAN, a single IEEE 802.11 PHY frame has fields that are standardized as: a short training field STF, a long training field LTF, a signal SIG in the frame section 371 (cf. FIG. 1), and DATA in the frame section 372 (cf. FIG. 1).

The fields STF, LFT, SIG and DATA each have standardized numbers of OFDM symbols. With the development of the standards, further fields can be used. For example, IEEE 802.1 1ac refers to very high throughput (VHT) and specifies the frame with L-STF 2 at OFDM symbols, L-LTF at 2 OFDM symbols, L-SIG 1 at OFDM symbol, VHT-SIG-A at 2 OFDM symbols, VHT-STF/VHT-LTF/VHT-SIG-B at one OFDM symbol each, and VHT-DATA at N OFDM symbols.

### Function of signature

As mentioned above, intrinsic signature 101 can serve as authentication tool. For example, the communication between two devices can be made conditional on both devices 500-A and 500-B recognizing their intrinsic signatures.

However, this is not free of problems. Further devices can measure the phase-deviations as well.

Devices (acting as receiver) that are sufficiently sensitive to detect and evaluate such phase-deviations are (commercially) available. Such sensitive devices can be implemented by so-called software-defined radios (SDR). SDR is an umbrella term for transmitter/receiver hardware for that modulation and demodulation parameters are set by software. FIG. 1 shows SDR as device 500-X. The SDR would be physically located in sufficient proximity to devices 500-A and/or 500-B to intercept signals.

But being able to differentiate particular devices (i.e., by intrinsic signatures) also creates a privacy risk. While two devices exchange data with each other, the third device is not able to intercept the content of the data (due to the mentioned measures in the higher OSI-layers), but the third device might detect that a particular device is communicating. For example, Alice and Bob should legitimately communicate via their smartphone devices (e.g., exchange text messages).

Device 500-A would eventually learn intrinsic signature 101-B from device 500-B, and vice versa, and both devices would check the intrinsic signatures before exchanging data. Alice and Bob are not the only device users in the vicinity (e.g., 100 meter range), and the third device (e.g., SDR 500-X in FIG. 1) would eventually detect one signature or both signatures as well. The intercepting third device might act as as spy device: it could identify the physical location of the devices in real-time by tracking. In the worst case, this scenario creates a security risk to Alice and Bob (not to the devices, but to the persons).

There are technical approaches to make tracking more complicated. In the higher OSI layers (cf. 501-A and 501-B FIG. 1), the devices may use media access control (MAC) address randomization, the devices may frequently update identifiers, or apply other measures. But the intrinsic signatures (i.e., phase-deviations) are not related to the data that is being communicated. In other words, whatever the measures in the higher OSI-layers are, the intrinsic signatures remain.

Even worse, the third device (e.g., the SDR) could run an impersonation attack by pretending to be device 500-A (and/or 500-B), by modifying its own signature accordingly. To stay with the text messages, the third device might break the security measures in the other layers and could successfully send a fake message in Alice' name.

Implementing such an attack is relatively easy, there are at least two options to use software to modify the phase-deviations (in layer 1): the mentioned SDR can also operate as transmitter with particular phase-deviations, or an off-the-shelf device (e.g., a smartphone) could be re-programmed by a firmware patching tool (an example being available from https://github.com/seemoo-lab/nexmon).

In both cases, the signals can be shaped accordingly.

Randomizing signatures (by introducing random phase-deviations at the transmitter) would remove the unique identifier from the transmitting device. In such as scenario, authentication (in layer 1) would become impossible.

A timing aspect should be noted. FIG. 1 illustrates the intrinsic signature in synch with frames 370. The third device would recognize intrinsic signature 101 at substantially any time. In theory, the third device would need only one frame interval to detect the intrinsic signature. The third device would even detect the intrinsic signature with high accuracy because it could average from consecutive measurements.

FIG. 4 again illustrates the communication between wireless devices 500-A and 500-B, but also illustrates signature modification by applying pattern matrix 340. To simplify the illustration, FIG. 4 does not repeat all components from FIG. 1.

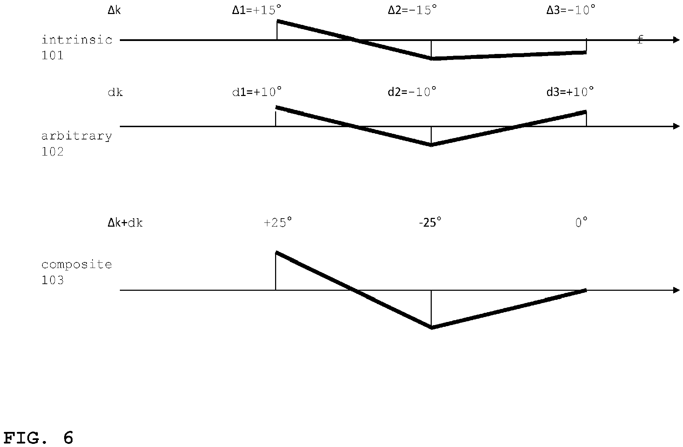

Pattern matrix 340 (in transmitter 100-A) introduces arbitrary phase-deviations, with details explained in FIG. 5. A composite signature (103 in FIG. 6) can be regarded as the sum of the intrinsic signature and an arbitrary signature (102 in FIG. 6).

Pattern matrix 340 changes and the arbitrary phase-deviations (and the signatures) change as well.

FIG. 4 again shows frame 370 from FIG. 1. While FIG. 1 differentiates frame 370 into two sections 371 and 372 (cf. the receiver tolerance), FIG. 4 illustrates the application of arbitrary phase-deviations to IEEE 802.11 PHY frames. It is possible to introduce arbitrary phase-deviations to section 372 only (i.e. to DATA only).

However, it is advantageous (for privacy and security reasons) to apply arbitrary phase-deviations to LTF, SIG and DATA. This is convenient in case of WLAN.

In case of using WLAN according to IEEE 802.1 1ac, arbitrary phase-deviations are applied to L-SIG, VHT-SIG-A, VHT-LTF, VHT-SIG-B, VHT-DATA (i.e., the whole frame, except L-STF). In case of using WLAN according to IEEE 802.1 In, arbitrary phase-deviations are applied to L-SIG, HT-SIG, HT-LTF, HT-DATA (i.e., the whole frame, except L-STF).

### Transmitter with arbitrary phase-deviations

FIG. 5 illustrates a block diagram of transmitter 100 that introduces arbitrary phase-deviations. In terms of signature, transmitter 100 creates arbitrary signature 102 (cf. FIG. 6).

Transmitter 100 can be implemented as part of circuit 500 (cf. FIG. 1).

Symbol unit 120 obtains a set of logical code symbols 310 (i.e., from main part 501 in FIGS. 1, 4). In the example, the logical code symbols are symbol 311 "11", symbol 312 "01" and symbol 313 "00". Symbol unit 120 obtains set 310 from main part 501 (cf. FIG. 1) or otherwise. (Looking at the higher OSI-layers, there is communication between main parts 501 of the devices and symbol unit 120 is input of the transmitter 100 at the physical layer.)

Symbols unit 120 derives a set of modulation symbols 320 (from logical code symbols 310), with values of the in-phase component (I) and for the quadrature component (Q), as explained above in FIG. 2. In the example, the modulation symbols are symbol (1,1), symbol (-1, 1), and symbol (-1, -1). In the figure, the logic-modulation mapping is just an example, the skilled person can use a different mapping.

The figure shows them in the notation of FIG. 2 for the ideal case (i). The symbols are specific for the subcarriers of the set of subcarriers {f}, cf. FIG. 3.

Baseband processor unit 160 performs baseband processing to the modulation symbols. Since baseband processing is well-known, the figure just sketches some components: IFFT unit 161 transforms modulation symbols 320 from the frequency domain to the time domain (i.e., by performing IFFT over the set {f} of subcarriers).

Optionally, mixer unit 162 merges the time domain signals with an oscillation signal from oscillator unit 163, to amplify the signal. Those of skill in the art can apply a different implementation. In any case, the resulting signal is antenna signal 390 (cf. FIG. 1).

So far, this corresponds to transmitter implementations in traditional baseband processor circuits (cf. 800). The path before mixer unit 162 can be regarded as the digital part (with discrete binary signal levels), and the path starting at mixer unit 162 can be regarded as the analog part (with minor deviations being propagated to the antenna, such as phase-deviations).

The following is added: Pattern unit 150 (between symbol unit 120 and baseband processor unit 160) modifies modulation symbols 320 to modified modulation symbols 350. The figure uses the symbolic notation (plain lines), cf. FIG. 2. The modification adds arbitrary phase-deviations per subcarrier.

FIG. 5 does not illustrate the intrinsic phase-deviations Δ (cf. FIGS. 2-3) because they are caused be the manufacturing variations of the circuit, see above.

More in detail, pattern unit 150 obtains pattern matrix 340 with a set {d} of phase rotation values d1, d2, d3 that indicate arbitrary phase-deviations per subcarrier f1, f2, f3, respectively. In the example, the values are +10°, +10° and +10°. Instead of angle degree values, pattern matrix 340 can be implemented otherwise, for example, by indicating complex numeric values (e.g., indicating a shift for I and a shift for Q). The degree notation is however more illustrative. The term "phase rotation" is alternative to "arbitrary phase-deviation" and illustrates the phase modification by that the vector would rotate around the origin of the coordinate system.

The phase rotation values (d1, d2, d3) can have magnitudes equal to or smaller than a pre-defined value, such as 360° (or 2π radian in an alternative notation). Such a limitation can be advantageous to avoid a change of the logical symbols. The 360° limitation corresponds to a full circle, and the limitation avoids ambiguity (e.g., 361° would be 1°). Phase rotation below the pre-defined value does not affect the transmission of the logical symbols.

Pattern unit 150 applies the phase rotation values to modulation symbols 321, 322, 323.

Optionally, pattern unit 150 performs this operation with the modulation symbols 321, 322, 323 and the phase rotation values d1, d2, d3 having complex numeric values. Such an approach may be advantageous in minimizing the use of computation resources.

The transmitter performs baseband processing (unit 160) with modified modulation symbols 351, 352, 353 (i.e., set 350) but not with the (original) modulation symbols.

Pattern unit 150 can be communicatively coupled to main part 501 (to receive the pattern, cf. FIG. 9-10).

Of course, the figure is simplified. In case of WLAN (current standards) there could be more subcarriers for that modulation symbols are modified. The person of skill in the art can adapt the approach accordingly. There is no need to apply the phase-deviation modification to all subcarriers, but to avoid third devices to detect intrinsic signatures at particular subcarriers only, it may be advantageous to apply the phase-deviations to all of them, including the subcarrier with pilot signals.

In case that transmitter 100 is implemented by a baseband processor circuit 500 or the like, pattern unit 150 can be implemented by additional instructions (add-on instruction) to the firmware of the circuit.

### Different signatures

FIG. 6 illustrates frequency-specific phase-deviations by intrinsic signature 101, arbitrary signature 102 and by composite signature 103.

The figure repeats signatures in the example for the subcarriers at frequencies f1, f2 and f3 (or f1 ... fk ... fK in general).

Intrinsic signature 101 (with Δk at +15°, -15° and -10°) has been explained above (FIG. 3). Arbitrary signature 102 corresponds to pattern 340 (cf. FIGS. 4-5, with dk at +10°,-10° and +10°). Composite signature 103 is just the sum of signatures 101 and 102, leading to composite phase-deviations (Δk + dk) of +25°, -25° and 0°. The bold lines are added for convenience.

Receiver 200 that would be adapted to know arbitrary signature 102 can recover intrinsic signature 101 (by subtraction).

### Different signatures, realistic number of subcarriers

FIG. 7 illustrates frequency-specific phase-deviations by the signatures of FIG. 6 in an example with more subcarriers, for transmitter 100. The figure shows an example for WLAN, with K = 52 corresponding to an older WLAN standard.

The signatures are the original signature (i.e., intrinsic signature 101), pseudo-random phase rotations (i.e., arbitrary signature 102), pseudo-random signature (i.e. composite signature 103). The phases on the ordinates are given as "fingerprint". The plus-sign symbolizes that the signatures (on the left) add to the composite signature (on the right).

Receiver 200 (and/or SDR 500-X in FIG. 1) would potentially identify the pseudo-random signature, appearing as randomized. However, receiver 200 being adapted would be able to recover the intrinsic signature, as described above.

### Adapted receiver

FIG. 8 illustrates frequency-specific phase-deviations for receiver 200 being adapted to recover the intrinsic signature by subtracting the arbitrary signature from the composite signature.

Receiver 200 has baseband processor unit 260 (with filter unit 261, oscillator unit 263, FFT unit 262), and pattern unit 250 and symbol unit 220.

Filter unit 261 and oscillator unit 263 pre-process antenna signal 390 (cf. FIGS. 1, 4, 5). The units are given symbolically to illustrate that receiver 200 tunes to a frequency band (e.g., IEEE 36 and/or 40) to derive a time-signal having a particular duration (usually a couple of micro-seconds). FFT unit 262 (i.e., the inverse to IFFT unit 162 in FIG. 5) performs Fast Fourier Transformation leading to set of modified modulation symbols 350 (cf. FIG. 5). The figure is simplified in ignoring phase-deviations introduced by the channel. From symbols 350, symbol unit 220 recovers code symbols 310 (i.e., the data that is being received). Further, pattern unit 250 applies pattern 340 to regenerate modulation symbols 320 (cf. FIG. 5). The phase-deviations correspond to arbitrary signature 102.

For simplicity, the intrinsic deviations are not illustrated.

### Applying the pattern in modifications

Having explained how the transmitter and the receiver apply pattern matrix 340, the description now discusses pattern modifications.

If unchanged, pattern matrix 340 would appear (to intercepting third devices such as the SDR) as a further signature. The intercepting device would detect composite signature 103 (instead of intrinsic signature 101) and would potentially start an impersonation attack with compositive signature 103. The intercepting device would not have to differentiate between the different kinds of signature.

Therefore, pattern matrix 340 is advantageously changed from time to time, so that the signature changes from time to time as well.

There are some constraining aspects to note:
- Once an intercepting device has detected a particular composite signature 103 as being characteristic to a particular device, the intercepting device could mis-use the signature (e.g. to start the impersonation attack) as long as the pattern matrix 340 remains unchanged.
- Modifying the pattern matrix may comprise the exchange of the matrix between the devices (involving main part 501) at the risk of intercepting the matrix.
- The memory of circuit 500 (cf. FIG. 1) is usually not dimensioned to store a relatively high number of different patterns.

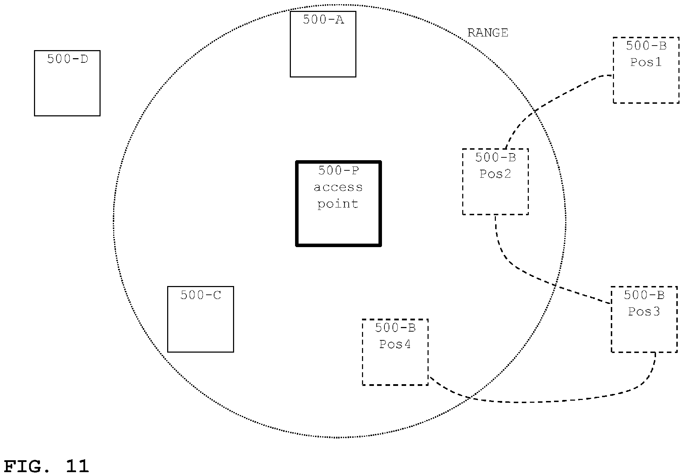

To address these constraints, the following measures are contemplated:
- The matrix modifications are performed by the transmitter/receiver with minimal interference to main part 501, by pattern unit 150/250. The time T between matrix modifications is synchronized to the duration of frames (e.g., frames 370 in FIG. 1). This is convenient, because pattern unit 150/250 knows the appropriate time points from baseband processor units 160/260. In case of WLAN, the pattern matrix is modified with every new IEEE.802.11 PHY frame. Of course, other modification rates can be applied as well (e.g., every 2nd, or every 10th frame). Relating the pattern modification to the frames reduces the time slot for misuse to a minimum.
- Pattern unit 150/250 can generate the pattern matrix, and the exchange between devices is limited to a pre-shared key (at a relatively long interval, cf. T^{∗}R, in FIG. 9) and - optionally - to a synchronization index (at a relatively short interval, changing at T). The resulting pattern matrix (and the arbitrary signatures) appear as random, but the changes are deterministic. Details are explained with FIG. 9.
- There is an additional key update at the occasion that a device joins or leaves a network, this is convenient for mobile devices. Details are explained with FIG. 11.

FIG. 9 illustrates pattern unit 150/250 generating pattern matrix 340 by applying key 385 to pattern generation rule 380. Transmitter 100 (and receiver 200) obtains pattern matrix 340 by key 385 according to pattern generation rule 380 that specifies how to derive the phase rotation values (i.e., d1, d2, d3; dk in general). Generating matrix 340 can be implemented as an add-on to pattern unit 150 (in the transmitter) and to pattern unit 250 (in the receiver).

The person of skill in the art knows how to derive pseudo-random numbers, there is no need to give much details here. Techniques are available (e.g. applying hashing), and the following examples give some guidance for hashing.

The figures illustrate matrix 340 in a sequence of matrices 340-1 to 340-R, with matrix 340-r being different that is predecessor matrix 340-(r-1). For an intercepting device, a signature resulting from a single matrix and signatures resulting from multiple applications of matrices in the sequence appear like random signatures. However, there is repetition at R. The matrix at R+1 would be same as matrix 340-1, the matrix at R+2 the same as matrix 340-2 and so on.

In the following, the description explains pattern generation rule 380 by a rule that applies a hash function. Hashing is well-known in the art. In the notation OUTPUT = HASH (INPUT), the values for INPUT and OUTPUT are given as bit patterns. The person of skill can select appropriate numbers of bits per pattern so that hash collisions are avoided. Also, minor changes to INPUT (even the toggling of a single bit) changes OUTPUT completely.

Once two devices have exchanged key 385 (standard approach in the art, no need for further explanation), the devices (i.e., pattern units 150/250) can determine the pattern matrix in the sequence.

To explain the phase-deviations Δk and dk, the above description has used examples in a 5° granularity. The intrinsic phase-deviation Δk will not follow any rule, but it with the above-explained tools (e.g., the SDR) it is possible to measure phase-deviations in the magnitude of 1° granularity.

For convenience, pattern units 150 and 250 (cf. FIGS. 5 and 8) can use matrix 340 that apply dk values that are byte-coded. Taking 2⁸ = 256 as an illustrative example, the 8 bit of bit pattern 0000.0000 could correspond to a -π radian deviation, the bit pattern 0000.1111 could correspond to a zero deviation, and the bit pattern 1111.1111 could correspond to a +π radian deviation (i.e., deviations over the full 360° circle). Other examples could be a 1° step per bit granularity.

In the following example, key 385 (or KEY) should be a bit pattern having 128 bits.

### First example

For example, the 3 x 8 bit pattern HASH (KEY) = 0001.0010 0100.1000 0011.0010 would lead to 3 different arbitrary phase-deviations dk. In the example, the matrices of sequence would be the same.

### Second example

Since WLAN uses much more carrier frequencies, such as K = 60, the HASH (KEY) bit pattern would have to have 60 x 8 bit = 180 bit. For performance and other reasons, it is advantageous to split the computation to have multiple hash outputs.

The hash function can be enhanced to HASH (KEY ~ COUNTER), with less bits at the output. The ∼ symbol between the variables stands for a concatenation of bit sequences (i.e., of KEY and COUNTER). Using COUNTER between (for example) 0000.0001 and 0011.1100 leads to K = 60 different arbitrary phase-deviations d1 to d60. Even if two COUNTER values differ in a single bit, the hash value (hence the deviation) would be different.

The person of skill in the art can implement this rule by pattern units 150/250 operating serially or in parallel. There is sufficient time to apply the serial approach. The COUNTER can have other values depending on the use of the bits at the HASH output. For example, instead of counting to 60, the counter could go to 10 (from 0000.0001 to 000.1010) provided that the HASH has a sufficient number of bits to obtain the phase-deviations for 6 subcarriers.

However, the phase-deviations dk in the first and second examples would not change over time. As explained already, this might be a security risk (intercepting device seeing a constant signature).

### Third example

In order to provide pattern matrix 340 as a sequence that the receiver can regain, the hash function is further enhanced to HASH (KEY ~ COUNTER ~ INDEX). With every new frame (duration T, cf. 370 in FIG. 1, IEEE 802.11 PHY in FIG. 4), the INDEX is modified. INDEX is a synchronization index. For example, INDEX is modified by "one" for every new frame. It does not matter if INDEX is counted up (+1) or counted down (-1), or if INDEX follows a pre-defined permutation, the INDEX returns to its original value after R repetitions in the hash function (duration T^{∗}R). Synchronization is provided for both the transmitter and the receiver counting INDEX likewise.

It is convenient (for use in WLAN) to have INDEX with 32 bit, in the value range between 0000.0000 0000.0000 0000.0000 0000.0000 and 1111.1111 1111.1111 1111.1111 1111.1111. In decimal notation the index has 2³² different values.

As pattern unit 250 at the receiver applies the same rule, the same KEY, the same COUNTER and the same INDEX, it would determine pattern matrix 340 accordingly. The receiver would simply count INDEX for each incoming frame. However, the channel between the device is not ideal. The transmission (to the receiver) of some frames will fail.

While the receiver can accommodate such situations by appropriate measures in higher OSI layers (e.g., re-transmitting data TCP/IP, disregarding data UDP/IP) there is a problem for the receiver to know the applicable INDEX.

### Fourth example

A solution is provided by the transmitter using DATA in the IEEE 802.11 PHY (cf. FIG. 4) to communicate INDEX. In other words, the transmitter informs the receiver how to synchronize the application of the key (in the HASH function). An intercepting device can not re-calculate HASH (i.e. the matric pattern) because KEY is not known.

Even is a frame is lost, the receiver can recover the data of the received frames (and subsequently let pattern unit 250 obtain the signature).

### Discussion

The resulting pattern change (here from 340-1, 340-2 and so on) would be repeated every R patterns (from 340-1 to 340-R, third and fourth examples). The magnitude of INDEX determines R.

Assuming that pattern matrix 340 is modified at equidistant time intervals T (e.g., time for a single frame 370), a pattern repetition time would be T^{∗}R.

Much simplified - and give a magnitude estimation only - with a frame rate T = 10 micro seconds and a 32 bit INDEX (approximately 4.000.000.000 different INDEX values), the repetition time T^{∗}R would be 40.000 seconds, roughly half a day. An intercepting device (such as the SDR in FIG. 1) would need that time to detect the repetition, and would have to store data during that time.

But the pattern repetition time T^{∗}R is large enough to let the devices exchange an amount of data that the intercepting device can not modify. During T^{∗}R, the devices may communicate data of about 1 GigaByte (or even more, 10 MByte/s transfer rate leading to 400 GigaByte). During that time T^{∗}R (and during the communication of that data), the intercepting device would not be able to detect the pattern modification, the intercepting device would not be able to complete the impersonation attack.

Nevertheless, the risk of attacks can be further minimized as explained in connection with FIG. 11.

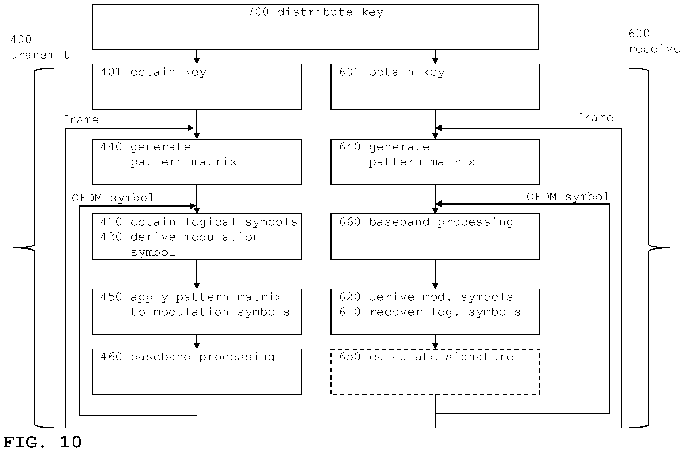

FIG. 10 illustrates a flow chart of method 400 to generate an antenna signal (left side, by the transmitter), and of method 600 to process the antenna signal (right side, by the receiver).

The figures illustrates an embodiment that is suitable for WLAN (and for the fourth example). It is noted that transmitters and receivers are available on both devices (such as to devices 500-A and 500-B, cf. FIG. 1).

Initially, there is step 700 of distributing the pseudo-randomization key 385 to transmitters 100-A/100-B and to receivers 200-A/200-B. The step can be performed with the participation of the devices (i.e., exchange) or otherwise (e.g., by distributing the index from a server computer). Optionally, the distribution of the key is secured by encryption/decryption.

Transmitters 100-A/100-B can obtain the key (385 in FIG. 9) in step 401 and receivers 200-A/200-B can obtain the key in step 601. For simplicity it can be assumed that that the communication in A-B-direction uses the same index as the communication in B-A-direction, but asymmetric key can be used as well (potentially providing further security).

Steps 401 and 601 are illustrated separately. Since both the transmitter and receiver functions can be implemented by the same WLAN-circuit, both steps can be combined to a single step.

Assuming that a new frame (i.e., IEEE 802.11 PHY) has to be transmitted, transmitter 100 generates the pattern matrix (by using the key, cf. FIG. 9), obtains logical symbols 410, derives modulation symbols 420, applies the pattern matrix to the modulation symbols 450 and performs baseband processing 460. The details have been explained above with FIG. 5. Steps 410, 420, 450 and 460 are repeated for every OFDM symbol, with the exception that step 450 is not performed for the 2 OFDM symbols of L-STF (cf. FIG. 4).

The figure is simplified in omitting some well-known processing steps such as adding waiting slots or guard intervals.

The resulting frame (at the antenna signal) goes to receiver 200-B via the channel.

As soon as the antenna signal starts to arrive (time domain), receiver 200 generates the pattern matrix 640 (i.e. the same as at the transmitter, generating in advance possible), performs baseband processing 660, deriving modulation symbols 620 and recovering logical symbols 610. Steps 660, 620 and 610 are repeated for every OFDM symbol.

There is a further repetition (steps 640, 660, 620, 610) when a new frame arrives.

As explained with FIG. 8, FFT unit 262 provides an intermediate signal (modulation signals having phase-deviations), the receiver can calculate the intrinsic signature, step 650 (based on the pattern matrix that is known).

As calculating the signature is illustrated within the frame repetition, the (composite) signature is different for each frame, but the calculated intrinsic signature would be the same (cf. the discussion with FIG. 6).

In case that receiver 200 belongs to an intercepting device (cf. the SDR in FIG. 1), it would perform baseband processing 660, deriving modulation symbols 620 and recovering logical symbols 610, in repetitions. But the signature would be the composite signature only, the intercepting device would not be able to calculate the intrinsic signature.

### Further aspects

Each of the phase rotation values (d1, d2, d3) has a magnitude equal to or smaller than 360°. Convenient values are provided in a power-of-two granularity, such as in a granularity with 2⁸ values.

The step applying 450 the phase rotation values by the pattern unit (150) can be is performed with the modulation symbols 321, 322, 323 and the phase rotation values d1, d2, d3 having complex numeric values.

Generating the antenna signal 390 can comprise to perform IFFT (161) over the set of subcarriers.

The method steps can be implemented by corresponding computer modules (e.g., key obtainer module, pattern matrix generation/application unit or pattern unit, baseband processing unit and so on).

FIG. 11 illustrates a WLAN network with a plurality of WLAN-enabled devices, with key updates.

In the example, the WLAN-enabled devices are mobile device 500-A/B/C/D and access point device 500-P. The communication ranges of device 500-P is symbolized by a circle. Device 500-D is located out of range, devices 500-A and 500-C are located inside the range. Device 500-B changes its position, with Pos1 (outside the range), Pos2 (in-range), Pos3 (out-range) and Pos4 (in-range).

There is data communication between first and second wireless devices each having a radio transmitter and radio receiver with refreshing pseudo-randomization key 385 (cf. FIG. 9) every time the second device (e.g., 500-B) reaches the communication range of the first device, and de-activating key 385 when the second device leaves the communication range.

WLAN-enabled device (especially mobile devices) tend to connect to WLAN networks automatically, and the occasion of connecting can trigger the activation of key 385.

In view of authentication, access point device 500-P can regenerate the intrinsic signature (of device 500-B) and can thereby authenticate device 500-B. Access point device 500-P can regenerate the intrinsic signature of the other devices as well and can authenticate them (when in range).

Those of skill in the art can apply measures that use the result of successful authentication (by device 500-P) so that the communication between device 500-A and 500-B (i.e., between Alice and Bob) would be based on authentication as well.

In an alternative, devices 500-A and 500-B exchange signature data via device 500-P.

Having the validity of key 385 (a single key for all mobile devices, or separate keys) limited to the presence of a device within the range (of device 500-P) reduces the risk of recovering the key (or the pattern sequence).

It is estimated that mobile devices remain within the communication range (of the access point device) during intervals that are (in average) much shorter than T^{∗}R. For the intercepting device, determining the pattern modification is even more complicated.

### References

- 100: transmitter
- 101: intrinsic signature (one frame)
- 102: arbitrary signature
- 103: composite signature
- 120: symbol unit
- 150: pattern unit
- 160: baseband processor unit
- 161: IFFT unit
- 162: mixer unit
- 163: oscillator unit
- 190: antenna (of transmitter/receiver)
- 200: receiver
- 220: symbol unit
- 250: pattern unit
- 260: baseband processor unit
- 261: filter unit
- 262: FFT unit
- 263: oscillator unit
- 310: set of logical code symbols
- 311, 312, 313: code symbols
- 320: set of modulation symbols
- 321, 322, 323: modulation symbols
- 340: pattern matrix
- 350: set of modified modulation symbols
- 351, 352, 353: modified modulation symbols
- 370: signal frame
- 371: first frame section
- 372: second frame section
- 380: pattern generation rule
- 385: key
- 395: data
- 500: wireless devices
- 500-X: software define radio SDR
- 501: main part, with layer 2-7 components in wireless devices
- 400: method to transmit (with steps 4xx)
- 600: method to receive (with steps 6xx)
- 700: distribute pseudo-randomization key
- 800: baseband processor circuit
- COUNTER: counter
- I: in-phase component
- INDEX: synchronization index
- k: subcarrier index
- K: number of subcarriers
- KEY: key
- N: number of OFDM symbols with data
- r: matrix index
- R: number of pattern matrix repetitions
- Q: quadrature component
- T: frame interval
- T1, T2, T3: frame intervals
- -A, -B, ...-X: device identifier
- (I, Q): in-phase component, quadrature component
- d1, d2, d3: arbitrary phase-deviations, phase-rotation values
- f1, f2, f3: subcarrier frequencies
- {d}: set of phase rotation values, d1, d2, d3
- {f}: set of subcarriers, f1, f2, f3
- Δ1, Δ2, Δ3: intrinsic phase-deviations

## Claims

1. Method (400) to generate an antenna signal (390) for transmitting data (395) from a radio transmitter (100) to a radio receiver (200), wherein the radio transmitter (100) is adapted to apply frequency division multiplexing over a set ({f}) of subcarriers (f1, f2, f3), the method (400) being executed by the radio transmitter (100) with the following steps:
by a symbol unit (120), obtaining (410) a set (310) of logical code symbols (311, 312, 313) and deriving (420) a set (320) of modulation symbols (321, 322, 323) from the logical code symbols according to a pre-defined mapping, the modulation symbols with values for an in-phase component (I) and for a quadrature component (Q), and with the values being specific for the subcarriers (f1, f2, f3) of the set of subcarriers;
by a baseband processor unit (160), performing baseband processing (460) to the modulation symbols (321, 322, 323) to generate the antenna signal (390),
the method (400) **characterized by** a pattern unit (150) in the radio transmitter (100), obtaining (440) a pattern matrix (340) with a set ({d}) of phase rotation values (d1, d2, d3) that indicate arbitrary phase-deviations per subcarrier (f1, f2, f3), and applying (450) the phase rotation values to the modulation symbols (321, 322, 323) so that baseband processing (460) is performed with modified modulation symbols (351, 352, 353).

2. Method according to claim 1, wherein the steps obtaining (410) the set (310) of logical code symbols (311, 312, 313), deriving the set (320) of modulation symbols (321, 322, 323) and performing baseband processing (460) are repeated for generating the antenna signal (390) as a sequence of OFDM symbols that belong to a single IEEE 802.11 PHY frame.

3. Method according to claim 2,
wherein - for IEEE 802.11 PHY frames having the fields STF, LTF, SIG and DATA - the step applying (450) the phase rotation values is performed to the fields LTF, SIG and DATA,
wherein - for IEEE 802.11 PHY frames having the fields L-STF, L-LTF, L-SIG, VHT-SIG-A, VHT-STF, VHT-LTF, VHT-SIG-B, and VHT-DATA - the step applying (450) the phase rotation values is performed to the fields L-LTF, L-SIG, VHT-SIG-A, VHT-LTF, VHT-SIG-B, and VHT-DATA, or
wherein - for IEEE 802.11 PHY frames having the fields L-STF, L-LTF, L-SIG, HT-SIG, HT-STF, HT-LTF, and HT-DATA - the step applying (450) the phase rotation values is performed to the fields L-LTF, L-SIG, HT-SIG, HT-LTF, and HT-DATA.

4. Method (400) according to any of the preceding claims, wherein the transmitter (100) obtains (440) the set of phase rotation values (d1, d2, d3) in the pattern matrix (340) by processing a key (385) according to a pattern generation rule (380).

5. Method according to claim 4, wherein obtaining (440) the pattern matrix (340) is repeated in synchronization to frames (370).

6. Method according to claim 5, wherein obtaining (440) the pattern matrix (340) is repeated in synchronization to frames (370) by using a synchronization index (INDEX) that the transmitter (100) communicates to the receiver (200) together with the data (395).

7. Method according to claim 6, wherein the transmitter (100) communicates the synchronization index in a frame section (372) that carries the data (395).

8. Method according to claim 7, wherein obtaining (440) the pattern matrix (340) is repeated in synchronization to frames (370) being IEEE 802.11 PHY frames with a new pattern matrix (340) being obtained for every new IEEE 802.11 PHY frame.

9. The method according to any of the preceding claims, wherein obtaining the pattern matrix (340) is performed for both the transmitter and the receiver from the same source so that both obtain the same pattern matrix (340).

10. Method (600) to receive data (395) by a radio receiver (200) from a radio transmitter (100), with receiving the antenna signal (390) from a transmitter (100) that operates according to a method of any of claims 1 to 9, with the receiver (200) using the same pattern matrix (340) as the transmitter (100), with the receiver (200) performing the following further steps: regaining the modified modulation symbols (351, 352, 353), and applying the pattern matrix to recover intrinsic phase-deviations that are characteristic for the particular transmitter.

11. Method to communicate data (395) from a radio transmitter (100) to a radio receiver (200), with using frequency division multiplexing over a set ({f}) of subcarriers and with communicating sets (310) of logical code symbols (311, 312, 313) by the radio transmitter (100), with modulating the logical code symbols to modulation symbols (321, 322, 323) with values for an in-phase component (I) and for a quadrature component according to a pre-defined mapping, modulating being specific for the subcarriers (f1, f2, f3) of the set of subcarriers ({f}), and by the radio receiver (200) demodulating the modulation symbols to logical symbols, the method **characterized in that** both the radio transmitter (100) and the radio receiver (200) apply a pre-defined pattern matrix(340) with phase rotation values (d1, d2, d3) that indicate arbitrary phase-deviations per subcarrier, the pattern matrix being applied between modulator and baseband processor at the radio transmitter (100) and between baseband processor and de-modulator at the radio receiver (200).

12. Method according to claim 11, wherein the radio transmitter (100) and the radio receiver (200) communicate data (395) in IEEE 802.11 PHY frames, and wherein the pattern matrix (340) is modified with every new frame, and wherein the pattern matrix (340) is being calculated frame-wise from a pseudo-randomization key (385) and a pattern generation rule (380).

13. Method according to claim 12, applied for data communication between a first wireless device and a second wireless device (500-A, 500-B) each having a radio transmitter (100-A, 100-B) and a radio receiver (200-A, 200-B), with a first device (500-P) being a WLAN access point device (500-P), the second device (500-B) being a mobile device, with refreshing the pseudo-randomization key (385) every time the second device (500-B) reaches the communication range of the first device, and de-activating the pseudo-randomization key (385) when the second device leaves the communication range.

14. Computer program product implemented as firmware in the baseband processing circuit (800), when loaded into a memory of the baseband processing circuit and being executed by at least one processor of that circuit - performs the steps of any of the method according to claims 1-10.

15. Radio transmitter (100) adapted to generate an antenna signal (390) for transmitting data (395) to a radio receiver (200) by applying frequency division multiplexing over a set ({f}) of subcarriers (f1, f2, f3), the radio transmitter (100) being adapted to execute a method according to any of claims 1-10.
